# EUROPEAN PATENT APPLICATION

(11) **EP 4 629 267 A1**
(43) Date of publication of application: **08.10.2025**
(21) Application number: 23898336.5
(22) Date of filing: 30.11.2023
(51) Int. Cl.: H01B 7/14, H01B 7/18, H01B 3/30, H02G 15/08, H01B 7/17

(54) **SUBMARINE CABLE**

(30) Priority: 30.11.2022 KR 20220163775; 06.03.2023 KR 20230028946
(71) Applicant: LS Cable & System Ltd., Anyang-si, Gyeonggi-do 14119 (KR)
(72) Inventor: LEE, Jae Bok, Seoul 08734 (KR); KIM, Chul Min, Paju-si Gyeonggi-do 10820 (KR); CHAE, Kwang Su, Anyang-si Gyeonggi-do 14118 (KR); RHO, Yu Ho, Incheon 21955 (KR); KIM, Kyoung Soo, Bucheon-si, Gyeonggi-do 14596 (KR)
(74) Representative: K&L Gates LLP
(86) International application number: PCT/KR2023/019556
(87) International publication number: WO 2024/117812

(57) **Abstract**

The disclosure relates to a submarine cable in which each of a dynamic submarine cable section and a static submarine cable section is included in one submarine cable so that land and ocean equipment can be connected through a single submarine cable.

## Description

### [Technical Field]

The disclosure relates to a submarine cable. Specifically, the disclosure relates to a submarine cable that is capable of connecting a land facility and an offshore facility with a single submarine cable, by respectively including a dynamic submarine cable section and a static submarine cable section in one submarine cable without an intermediate junction box.

### [Background Art]

Recently, a renewable energy system in which electric power produced by installing wind turbines or the like at a remote offshore location that is a certain distance away from land, has sufficient wind volume and consistent wind direction, is supplied by being connected to onshore electric power facilities via power cables, is receiving attention.

When the water depth of the offshore location where the wind turbines or the like are installed is shallow, it is possible to install the wind power generator by installing a structure on the seabed and then installing the wind power generator on top of the structure. However, when the water depth is deep, the wind turbines may be installed by a floating method.

The wind turbines, substation facilities, and the like based on the floating method may be floated above the sea surface by being supported by a floating body for floating, and the floating body may be connected to an anchor installed on the seabed by a mooring line, thereby allowing the movement to be limited.

Further, the wind turbines installed offshore or a substation that connects to the wind turbines may be connected to onshore electric power facilities by a submarine cable laid underwater.

Here, the section from the onshore electric power facilities to the seabed near the offshore wind turbines is a section where the submarine cable is laid on the seabed, and since no movement of the cable occurs during the power transmission after cable laying, this section is referred to as a static section, and the submarine cable laid in this section is generally referred to as a static submarine cable. The section from the seabed near the wind turbines to the floating-type wind turbines or the substation is referred to as a dynamic section, since a great deal of movement occurs in the cable due to ocean currents, waves, and the like, and the submarine cable laid in this section is referred to as a dynamic submarine cable.

In such a dynamic section, since tensile force, torsion, or bending is significantly applied to the cable, the dynamic submarine cable requires higher mechanical durability compared to the static submarine cable.

Further, in case of a wind turbine or the like installed on a structure fixed to the seabed, movement is relatively limited, but in case of a generator or the like installed by a floating method, continuous movement occurs depending on waves and weather conditions, so it is difficult to ensure sufficient durability when connected by a general static submarine cable, and therefore, it needs to be connected by a dynamic submarine cable.

In case of the dynamic submarine cable and the static submarine cable, although the configuration of a core part including one or more power units for power transmission is similar, the dynamic submarine cable is laid in an environment distinguished from that of the static submarine cable, so the configuration of a cable protection part, such as an armor layer, is different, and accordingly, there is a difference in the cable manufacturing cost.

Therefore, conventionally, a method has been used in which a static submarine cable is installed in a static section from onshore electric power facilities to the seabed near the offshore wind turbine, and a dynamic submarine cable is installed in a dynamic section from the seabed to a floating-type wind turbine or a substation.

In this case, in order to connect the static submarine cable and the dynamic submarine cable, the cable connections are generally performed by using an intermediate junction box.

In this case, in order to connect submarine cables having different configurations (the connection between cables is referred to as an intermediate connection), a method of connecting the dynamic submarine cable and the static submarine cable using the intermediate junction box on a marine vessel in the connection area and then laying the cable has been used. However, when the cable connection work is performed on the vessel, there is a problem in that the cost of using the vessel for submarine cable laying significantly increases due to labor costs for skilled engineers for the connection and an increased work period caused by the connection.

### [Disclosure]

### [Technical Problem]

The disclosure is directed to providing a submarine cable that is capable of connecting a land facility and an offshore facility with a single submarine cable by respectively including a dynamic submarine cable section and a static submarine cable section in one submarine cable.

### [Technical Solution]

In order to achieve the aforementioned object, the disclosure is directed to providing a submarine cable. The submarine cable may include: a cable core part including one or more power units for power transmission; and a cable protection part surrounding an outer side of the cable core part, in which the submarine cable may include a first section primarily for seabed laying and a second section primarily for underwater laying along a longitudinal direction, the cable protection part may include an armor layer formed by circumferentially winding a plurality of armor wires, the armor layer may include a first armor layer formed continuously in the first section and the second section, and a second armor layer formed outside the first armor layer in the second section, the cable protection part may include an armor fixing part configured to fix the second armor layer to the first armor layer in a boundary region between the first section and the second section, and the armor fixing part may include an inner fixing ring mounted to circumferentially surround the first armor layer in the boundary region, and an outer fixing ring mounted to circumferentially surround the second armor layer disposed at a position different from the inner fixing ring along the longitudinal direction of the cable.

In addition, the cable protection part of the first section may include a serving layer finished by winding yarns around the outer side of the first armor layer, and the cable protection part of the second section includes a sheath layer finished by covering the outer side of the second armor layer with a polymer resin.

Further, the power unit may include: a conductor; an inner semi-conductive layer surrounding the conductor; an insulation layer surrounding the inner semi-conductive layer; an outer semi-conductive layer surrounding the insulation layer; and a metal shielding layer surrounding the outer semi-conductive layer.

Here, the inner fixing ring may be mounted to surround the first armor layer after an end portion of the second armor layer is deployed outward in the boundary region, and after the inner fixing ring is completely mounted, the deployed second armor layer may be restored, and the outer fixing ring may be mounted to surround the second armor layer.

In this case, the outer fixing ring may be provided on each of left and right sides of a mounting position of the inner fixing ring.

Further, the first armor layer may be a first metal armor layer formed of metal armor wires, and the second armor layer may be a second metal armor layer formed of metal armor wires.

In addition, the inner fixing ring may be fixed by welding to the first metal armor layer.

Further, a welded portion may be provided, which is welded in a circumferential direction between left and right edges of the inner fixing ring and metal armor wires constituting the first metal armor layer, so that the inner fixing ring may be fixed to the first metal armor layer.

Here, the welded portion may include a plurality of welded portions spaced apart along circumferential directions of left edge and right edge of the inner fixing ring.

In this case, the inner fixing ring and the outer fixing ring may be each composed of two split rings, and respective end portions of the split rings may be joined to each other to form a circular ring.

Further, respective joining surfaces of the split rings may be formed as inclined surfaces in opposite directions so that weld melt is injected therebetween.

In addition, the respective end portions of the split rings may be formed in an oblique shape not parallel to the longitudinal direction of the cable.

Further, a cross-sectional thickness of the split ring may have a maximum thickness at a central portion thereof.

Here, the submarine cable may further include at least one carbon tape layer circumferentially wound to surround an outer side of the armor fixing part in the boundary region.

### [Advantageous Effects]

According to the submarine cable according to the disclosure, a first section for seabed laying and a second section for underwater laying are provided in sectional units along a longitudinal direction in a single submarine cable, so that a separate intermediate connection work or an intermediate junction box may be omitted.

In addition, according to the submarine cable according to the disclosure, an armor fixing part provided in a boundary region between the first section and the second section of the submarine cable may stably fix a second armor layer further provided in the second section.

### [Description of Drawings]

FIG. 1 illustrates an example of a configuration of an offshore wind power generation system connected by a submarine cable according to the disclosure.
FIG. 2 is a perspective view illustrating a multi-stage stripped state of a first section region for seabed laying among the submarine cable according to the disclosure.
FIG. 3 is a perspective view illustrating a multi-stage stripped state of a second section region for underwater laying among the submarine cable according to the disclosure.
FIG. 4 illustrates a state in which an outermost layer of the first section and an outermost layer of the second section are removed in a boundary region between the first section and the second section of the submarine cable according to the disclosure.
FIG. 5 illustrates a state in which a second metal armor layer of the second section is deployed for mounting an inner fixing ring for internal fixation in the boundary region between the first section and the second section of the submarine cable according to the disclosure.
FIG. 6 illustrates a process in which an inner fixing ring in the form of a split ring is mounted on an outer circumferential surface of a first metal armor layer of the submarine cable according to the disclosure.
FIG. 7 illustrates a state in which the inner fixing ring in the form of a split ring is mounted on the outer circumferential surface of the first metal armor layer of the submarine cable according to the disclosure and then welded and fixed by a welding method.
FIG. 8 illustrates a process in which, in a state where the inner fixing ring is mounted on the outer circumferential surface of the first metal armor layer, the second metal armor layer is restored and an outer fixing ring is mounted so as to surround the second metal armor layer.
FIG. 9 illustrates a state in which mounting of the outer fixing ring on an outer circumferential surface of the second metal armor layer of the submarine cable is completed.
FIG. 10 illustrates a process of forming a carbon tape layer by circumferentially winding carbon tape around the armor fixing part in the state where the outer fixing ring is mounted.
FIG. 11 illustrates a state in which finishing of the armor fixing part with the carbon tape layer is completed in the submarine cable according to the disclosure.
FIG. 12 illustrates a test apparatus for the submarine cable according to the disclosure.
FIGS. 13 to 15 illustrate examples of an inner fixing ring or an outer fixing ring applied to the armor fixing part of the submarine cable according to the disclosure.

### [Mode for Disclosure]

Hereinafter, exemplary embodiments of the disclosure will be described in detail with reference to the accompanying drawings. However, the disclosure is not limited to the exemplary embodiments to be described below and may be specified as other aspects. On the contrary, the embodiments introduced herein are provided to make the disclosed content thorough and complete, and sufficiently transfer the spirit of the disclosure to those skilled in the art. Like reference numerals indicate like constituent elements throughout the specification.

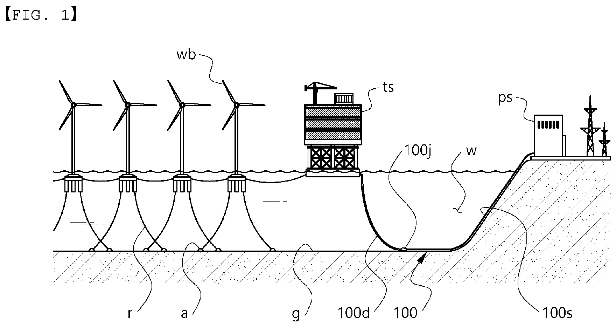

FIG. 1 illustrates an example of a configuration of an offshore wind power generation system connected by a submarine cable 100 according to the disclosure.

Installation of wind turbines wb is increasing at remote offshore locations that are a certain distance away from land, where wind volume is sufficient and wind direction is consistent.

In order to utilize locations where the wind volume is abundant and consistent, wind turbines (wb) are often installed in deep-sea areas, which are not coastal areas near land. In case of wind turbines installed in coastal areas where the water depth is shallow, a structure is erected on the seabed, and the wind turbine is installed on the upper portion thereof. However, in deep-sea areas, it is often not feasible to install a seabed structure, so the wind turbine wb may be installed in a floating manner, and the wind turbine wb may be installed by fixing an anchor a to the seabed, connecting the wind turbine wb to the anchor a by a fixing wire r, and thereby fixing only the position of the wind turbine wb.

In addition, rather than being configured individually, the offshore wind turbines wb may be installed as a plurality in order to construct a large-scale power generation complex, and electric power produced by the plurality of wind turbines wb may be aggregated and supplied to onshore power facilities ps through substation facilities ts or the like, in a manner that minimizes power loss.

In this case, the onshore power facilities ps and the offshore substation facilities ts may be connected by a submarine cable 100.

The submarine cable 100 illustrated in FIG. 1 is connected to onshore power facilities ps and is laid on the seabed up to the vicinity of offshore substation facilities, but in order to be connected from the seabed near the substation facilities to the offshore substation facilities ts installed in a floating manner, underwater laying is required.

Here, the submarine cable installed on the seabed is generally buried in the seabed or covered with protective materials. In contrast, in the section from the seabed to the sea surface, the submarine cable is exposed underwater and is affected by various external forces such as currents and waves, and the installation of the submarine cable from the seabed to the sea surface is referred to as underwater laying. In addition, the submarine cable may be connected to substation facilities, etc. installed above the sea surface, and the section above the sea surface may also be regarded as an underwater laying section.

Therefore, the submarine cable 100 for connecting the onshore power facilities ps and the offshore substation facilities ts may be installed on the seabed g in a part of the section and installed underwater in another part of the section.

in case of the submarine cable 100, it is preferable that the section installed on the seabed and the section installed underwater have differently configured cable protection parts due to differences in the respective environments. The region installed underwater is a section where the cable is continuously subjected to stimulation by waves or currents, and therefore, reinforcement of the cable protection part is required as compared to the region installed on the seabed g.

Due to such differences in cable protection parts, the submarine cable 100 is classified into a dynamic submarine cable and a static submarine cable, and as illustrated in FIG. 1, in case of the submarine cable 100 for connecting onshore power facilities ps and offshore substation facilities ts, both a dynamic submarine cable and a static submarine cable are required for each region. Therefore, conventionally, the dynamic submarine cable and the static submarine cable have been connected on a vessel using an intermediate junction box, and then installed on the seabed. However, since this greatly increases the cost, in the disclosure, the intermediate junction box may be omitted by manufacturing a single submarine cable 100 in which the cable protection part is different for each section along the longitudinal direction of the submarine cable.

In addition, as illustrated in FIG. 1, in the total length of the submarine cable 100 for connecting the onshore power facilities ps and the offshore substation facilities ts, since the length of the section installed underwater is relatively shorter than the length of the section installed on the seabed, configuring the entire submarine cable 100 as a dynamic submarine cable is unreasonable from a cost perspective.

That is, the submarine cable 100 according to the disclosure is configured to include both a first section 100s region, which is a static submarine cable section primarily for seabed laying, and a second section 100d region, which is a dynamic submarine cable section primarily for underwater laying, and has a structural characteristic of being formed as a single submarine cable without an intermediate junction box.

Here, although the section for seabed laying of the submarine cable is defined as the first section region, and the section for underwater laying is defined as the second section region, this does not necessarily mean that the two sections are strictly separated. Rather, for safety, it is preferable that a partial region of the second section be installed in the seabed laying section.

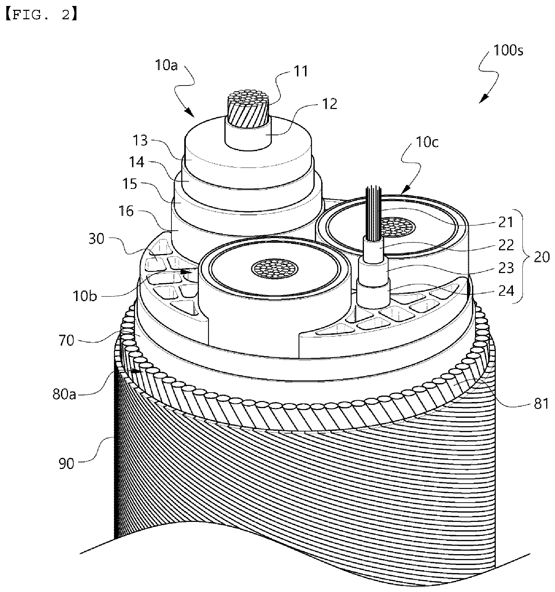

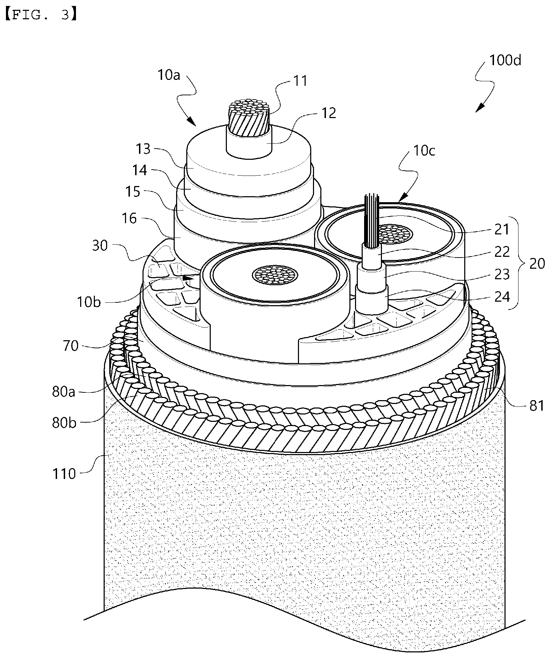

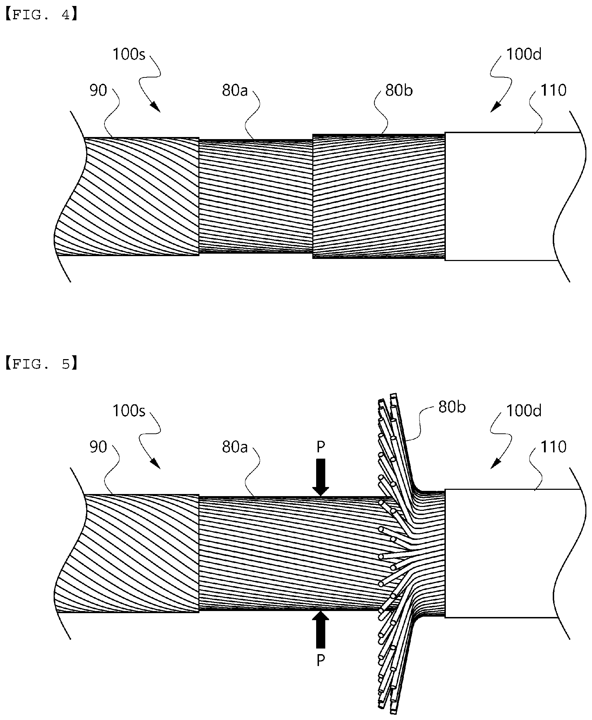

First, with reference to FIGS. 2 and 3, after examining the differences between the first section 100s region and the second section 100d region according to the internal structures of the first section, which is primarily for seabed laying, and the second section, which is primarily for underwater laying, the structure and fixing method of an armor fixing part 100j, in which different cable armor layers are fixed in a boundary region, will be described with reference to FIG. 4 and the subsequent figures.

FIG. 2 is a perspective view illustrating a multi-stage stripped state of the first section 100s region for seabed laying among the submarine cable 100 according to the disclosure, and FIG. 3 is a perspective view illustrating a multi-stage stripped state of the second section 100d region for underwater laying among the submarine cable 100 according to the disclosure.

With reference to FIGS. 2 and 3, the submarine cable 100 according to an embodiment of the disclosure includes a cable core part, which includes one or more power units 10 for power transmission, and a cable protection part that surrounds an outer side of the cable core part. The cable core part may include three power units 10, an optical unit 20, and a filling member 30, and the cable protection part may include a bedding layer 70, armor layers 80a and 80b, and a serving layer 90 or a sheath layer 110 corresponding to the outermost layer. Detailed descriptions of the respective configurations will be provided below.

In the embodiment of the disclosure, a three-phase cable having three power units 10 is illustrated as an example, but the disclosure is not limited thereto, and may also be applied to a case in which only one power unit is included or in which the number of power units is different.

Each of the power units 10 may be configured to include a conductor 11, an inner semi-conductive layer 12, an insulation layer 13, an outer semi-conductive layer 14, a metal shielding layer 15, and a polymer sheath 16.

The conductor 11 serves as a path through which current flows to transmit electric power, and may be formed of a material having excellent conductivity and appropriate strength and flexibility for cable manufacture and use, such as copper or aluminum, in order to minimize power losses.

As illustrated in FIG. 2, the conductor 11 may be a collective conductor in which a plurality of round wires are stranded and grouped in a circular shape, and more specifically, may be a collective conductor stranded and grouped in an S direction or a Z direction. Furthermore, the conductor 11 may be a rectangular flat conductor, having a rectangular flat wire layer formed by stranding rectangular flat wires around a central round wire, and having an overall circular cross-section, and in case where the conductor is configured as the latter rectangular flat wire conductor, there is an advantage that the filling factor is relatively higher than that of a compressed round conductor, so that the outer diameter of the cable may be reduced.

However, since the conductor 11 does not have a smooth surface, the electric field may be non-uniform, and corona discharge may easily occur locally. In addition, when a void is formed between the surface of the conductor 11 and the insulation layer 13 to be described below, insulation performance may deteriorate.

To solve the above problems, the inner semi-conductive layer 12 may be provided outside the conductor 11. The inner semi-conductive layer 12 may have semi-conductivity by adding conductive particles such as carbon black, carbon nanotubes, carbon nanoplates, graphite, and the like to an insulating material.

The inner semi-conductive layer 12 performs a function of stabilizing insulation performance by preventing a sharp electric field variation from occurring between the conductor 11 and the insulation layer 13 to be described below. In addition, by suppressing non-uniform charge distribution on the surface of the conductor, the electric field is made uniform, and void formation between the conductor 11 and the insulation layer 13 is prevented, thereby suppressing corona discharge, insulation breakdown, and the like.

The insulation layer 13 is provided on the outer side of the inner semi-conductive layer 12 and electrically insulates the conductor 11 from the outside so that current is not leaked externally along the conductor 11. In general, the insulation layer 13 needs to have a high breakdown voltage, and its insulation performance needs to be stably maintained over a long period of time. Further, the insulation layer 13 needs to have low dielectric loss and thermal resistance properties such as heat resistance. Therefore, a polyolefin resin such as polyethylene and polypropylene may be used for the insulation layer 13, and the polyethylene resin may be formed of a crosslinked resin.

An outer semi-conductive layer 14 may be provided outside the insulation layer 13. The outer semi-conductive layer 14, like the inner semi-conductive layer 12, is formed of a material having semi-conductivity by adding conductive particles, such as carbon black, carbon nanotubes, carbon nanoplates, graphite, and the like to an insulating material, and suppresses non-uniform charge distribution between the insulation layer 13 and the metal shielding layer 15 to be described below, thereby stabilizing insulation performance. In addition, the outer semi-conductive layer 14 may also perform a function of smoothing the surface of the insulation layer 13 in the cable, thereby relieving electric field concentration and preventing corona discharge, and may also perform a function of physically protecting the insulation layer 13.

The power unit 10 may further include a moisture absorption part (not illustrated) for preventing moisture from penetrating into the inside of the cable. The moisture absorption part may be formed between elemental wires constituting the conductor 11 and/or outside the conductor 11. The moisture absorption part is configured in the form of powder, tape, coating layer, or film, etc. including a super absorbent polymer (SAP), which has a high rate of moisture absorption and excellent capability to retain the absorbed state, and serves to prevent moisture from penetrating in the longitudinal direction of the cable. The moisture absorption part may also have semi-conductivity in order to prevent rapid changes in the electric field.

The metal shielding layer 15 and the polymer sheath 16 may be further provided outside the outer semi-conductive layer 14. The metal shielding layer 15 and the polymer sheath 16 may protect the power unit of the cable from various environmental factors and fault currents such as moisture penetration, mechanical impact, corrosion, and the like, which may affect the power transmission performance of the cable.

The metal shielding layer 15 is grounded at an end portion of the cable and serves as a path through which a fault current flows in the event of a ground fault or short circuit, and may shield electric fields so that they do not discharge outside the cable, and may protect the cable from external impact.

As the metal shielding layer 15, a metal sheath or a wire shield may be used. In general, in case of a static submarine cable, a metal sheath is used as the metal shielding layer, but in case of a dynamic submarine cable, since the metal sheath may be subject to fatigue fracture due to movement of the cable, a wire shield formed by circumferentially winding a plurality of metal wires such as copper may be used as the metal shielding layer.

According to an embodiment of the disclosure, the first section, which corresponds to the static submarine cable section, forms a metal sheath as the metal shielding layer, and the second section, which corresponds to the dynamic submarine cable section, forms a wire shield, such that the metal sheath of the first section and the wire shield of the second section may be used by being joined in a boundary region between the first section and the second section.

In case of the metal sheath, it may be formed to seal the inside and prevent foreign substances such as moisture from penetrating and degrading the insulation performance. For example, metal in a molten state may be extruded on the outer side of the outer semi-conductive layer to form a continuous outer surface without seams, thereby improving water permeation resistance performance. As the metal of the metal sheath, lead or aluminum may be used. In particular, in case of submarine cables, it is preferable to use lead having excellent corrosion resistance against seawater, and it is more preferable to use lead alloy, in which metal elements are added to supplement mechanical properties.

Outside the metal shielding layer 15, the polymer sheath 16 made of resin such as polyvinyl chloride (PVC) or polyethylene may be formed, thereby improving corrosion resistance and water permeation resistance performance of the submarine cable, and performing a function of protecting the cable from mechanical impact, heat, ultraviolet rays, and other external environmental factors. In particular, in case of a submarine cable, it is preferable to use a polyethylene resin having excellent water permeation resistance performance.

In addition, the power unit 10 may further include a copper wire-inserted tape (not illustrated) or a moisture absorption layer (not illustrated) between the metal shielding layer 15 and the outer semi-conductive layer 14. The copper wire-inserted tape may be composed of a copper wire, a non-woven fabric tape, and the like, and may serve to facilitate electrical contact between the outer semi-conductive layer and the metal sheath. The moisture absorption layer (not illustrated) may be formed in the form of powder, tape, coating layer, film, or the like, which includes a super absorbent polymer (SAP) having a fast moisture absorption rate and excellent retention capability. Accordingly, the moisture absorption layer may prevent moisture from penetrating in the longitudinal direction of the cable. In addition, in order to prevent rapid changes in the electric field in the moisture absorption layer, the moisture absorption layer may be configured by including copper wires in the moisture absorption layer.

In particular, when a wire shield is used as the metal shielding layer 15, since its water permeation resistance performance is inferior to that of a metal sheath, it is preferable to further provide a moisture absorption layer (not illustrated) to improve water permeation resistance performance.

Meanwhile, the submarine cable 100 may further include the optical unit 20.

Here, the optical unit 20 may include at least one optical fiber 21 and a tube 22 that accommodates the optical fiber 21.

The optical unit 20 includes a predetermined number of optical fibers 21 mounted in the tube 22 together with a filling material, and the tube may be formed of a material having rigidity, such as stainless steel. In addition, the optical unit 20 may further include a metal sheath 23 and a polymer sheath 24 that surround the tube 22.

Meanwhile, although FIG. 2 illustrates an example in which a single protective tube is provided inside a single sheath, this is merely one example, and it is of course also possible to configure a structure in which a plurality of protective tubes are provided inside one sheath, and at least one optical fiber is provided inside each of the protective tubes.

Meanwhile, since the submarine cable 100 illustrated in FIG. 2 is installed on the seabed, it may include various protective layers to protect internal components even under harsh environments such as seawater and salinity in the sea.

As illustrated in FIG. 2, according to an embodiment of the disclosure, the cable protection part of the submarine cable may include the bedding layer 70 formed of polypropylene (PP) yarn or the like that surrounds the power unit 10 and the optical unit 20, the armor layer 80a provided outside the bedding layer 70 to improve the mechanical strength of the submarine cable 100, and the serving layer 90 provided outside the armor layer 80a.

The armor layer 80a may be formed by obliquely and circumferentially winding a plurality of armor wires 81 in parallel around the outside of the bedding layer 70, and performs a function of enhancing the mechanical properties and performance of the submarine cable 100, and additionally protecting the cable from external forces.

It is preferable that the armor wires 81 constituting the armor layer 80a are formed of metal materials, but non-metal materials may also be used if they have high tensile strength.

In case of metal armor wires 81, they may be formed by circumferentially winding wires made of steel, galvanized steel, copper, brass, bronze, and the like, having cross-sectional shapes such as circular or rectangular flat, and in case of non-metal armor wires 81, materials such as aramid fiber or ultra-high-molecular-weight polyethylene fiber, which have high tensile strength, may be formed into a wire shape and used.

Hereinafter, in the embodiment of the disclosure, the explanation is given assuming the use of a metal armor layer formed of metal armor wires 81, but the disclosure is not limited thereto.

The armor wires constituting the metal armor layer may be spirally and circumferentially wound on the outer circumferential surface of the bedding layer 70 or the like, and preferably may be circumferentially wound in a Z-direction or S-direction opposite to the collective twisting direction of the power units.

In addition, the metal armor layer 80a of the first section 100s illustrated in FIG. 2 is configured to be continuous with the metal armor layer 80a disposed on the inner side of the second section illustrated in FIG. 3, and a more detailed description of the metal armor layer will be provided below.

The serving layer 90 may be formed of polypropylene yarn or the like, and is formed as the outermost layer on the outside of the metal armor layer 80, protecting the cable. The serving layer 90 formed at the outermost side may be composed of two or more kinds of materials having different colors, so that visibility of the cable laid on the seabed can be secured.

Meanwhile, in the submarine cable 100 according to the disclosure, the filling member 30 may be provided between the power unit 10 and the optical unit 20 and the bedding layer 70, in order to protect the power unit 10 and the optical unit 20 described above. The filling member 30 described above is provided in an empty space inside the submarine cable 100, and performs a function of maintaining a circular shape of the submarine cable 100 and a function of protecting the power unit and the optical unit. As illustrated in FIG. 2 or FIG. 3, a plastic insert 30 having a shape corresponding to the empty space may be used, or a plurality of round plastic inserts or fibers such as yarns made of polypropylene material may be filled into the empty space.

The submarine cable 100 illustrated in FIG. 2 shows the first section 100s for being installed on the seabed, and although it includes various protective layers to protect internal components even under harsh environments such as seawater and salinity, the influence of waves or currents is relatively small because it is supported and laid on the seabed.

In the section for connecting onshore power facilities ps and offshore substation facilities ts, the first section 100s region of the submarine cable 100 may be laid on the seabed, but the second section 100d region, which connects to a floating-type substation ts installed above the seabed, is subject to continuous movement due to currents and waves, and therefore, the second section 100d region needs to be provided with more reinforced protective layers than the first section 100s region.

In case of the second section 100d region of the submarine cable 100 illustrated in FIG. 3, a metal armor layer for improving the mechanical strength of the submarine cable 100 may be provided in multiple layers outside the bedding layer 70, and outside the multi-layer armor layer, the sheath layer 110 made of polymer resin material, which serves as a cable jacket instead of a serving layer, may be provided as the outermost layer.

Therefore, the metal armor layer may be configured to include a first metal armor layer 80a, which is continuously disposed in the first section 100s and the second section 100d, and a second metal armor layer 80b, which is disposed only in the second section 100d.

In addition, as illustrated in FIG. 3, when the first metal armor layer 80a disposed on the inner side is circumferentially wound in a Z-direction or S-direction opposite to the collective twisting direction of the three power units, it is preferable that the second metal armor layer 80b disposed on the outer side is circumferentially wound in the opposite direction to the first metal armor layer 80a. The first metal armor layer 80a and the second metal armor layer 80b may each be formed of any one of steel, galvanized steel, copper, brass, or bronze, and wires having circular or rectangular flat cross-sectional shapes may be circumferentially wound in the same manner.

On the outer side of the second metal armor layer 80b of the second section 100d, the sheath layer 110 made of a polymer resin such as polyvinyl chloride (PVC) or polyethylene may be formed by an extrusion method, thereby protecting the metal armor layer and minimizing cable damage caused by waves and currents in a harsh underwater environment, so that sufficient durability can be secured.

As such, in case of the submarine cable 100, it is preferable that the cable protection part be configured differently for each section in the longitudinal direction of the cable according to the laying environment. However, in order to constitute a single submarine cable 100 while providing different cable protection parts for each section, the cable protection part in the second section 100d, particularly the second metal armor layer 80b, needs to be securely fixed in a boundary region between the first section 100s and the second section 100d.

That is, since the second section 100d is a dynamic region in which continuous movement may occur, and the second metal armor layer is further provided, the second metal armor layer needs to be fixed in the boundary region between the first section 100s and the second section 100d in order to constitute a single submarine cable 100.

The cable protection part of the submarine cable 100 according to the disclosure includes an armor fixing part that fixes the second metal armor layer 80b to the first metal armor layer 80a in a boundary region between the first section 100s and the second section 100d. In addition, the armor fixing part includes an inner fixing ring mounted to circumferentially surround the first armor layer 80a in the boundary region between the first section 100s and the second section 100d, and an outer fixing ring mounted to circumferentially surround the second armor layer, which is disposed outside the inner fixing ring at a different position from the inner fixing ring along the longitudinal direction of the cable.

Hereinafter, with reference to FIGS. 4 to 11, finishing of the boundary region between the first section 100s and the second section 100d, and a fixing method of the second metal armor layer 80b in the second section 100d will be described.

FIGS. 4 to 11 illustrate a process of forming an armor fixing part 100j at a boundary between the first section 100s region and the second section 100d region of a submarine cable according to the disclosure.

Specifically, FIG. 4 illustrates a state in which the serving layer 90, which is an outermost layer of the first section 100s, and the sheath layer 110, which is the outermost layer of the second section 100d, are removed in the boundary region between the first section 100s and the second section 100d of the submarine cable 100 according to the disclosure. FIG. 5 illustrates a state in which the metal wires constituting the second metal armor layer 80b of the second section 100d are individually deployed outward, in order to mount the inner fixing ring 120 in the boundary region between the first section 100s and the second section 100d of the submarine cable 100 according to the disclosure.

As illustrated in FIG. 4, in order to mount the inner fixing ring 120, the serving layer 90 of the first section 100s and the sheath layer 110 of the second section 100d are removed in the boundary region between the first section 100s and the second section 100d, and as illustrated in FIG. 5, the metal armor wires constituting the second metal armor layer 80b of the second section 100d are deployed outward. The reason for deploying the second metal armor layer 80b is to mount the inner fixing ring 120 inside the second metal armor layer 80b.

The submarine cable 100 according to the disclosure includes the first section 100s and the second section 100d to be installed in a static region and a dynamic region of the seabed, but is a single power cable, and differences in the armor layers of the cable exist for each section in the longitudinal direction of the cable. Since the second section 100d of the submarine cable 100 according to the disclosure corresponds to an region continuously subjected to external stimuli by waves or currents, and thus tensile force and torsion are continuously applied to the cable.

That is, since the first metal armor layer 80a is installed throughout the first section 100s and the second section 100d, the influence of tensile force applied to the entire cable is not significant. However, in case of an end portion of the second metal armor layer 80b, which is disposed in the boundary region between the first section 100s and the second section 100d, the spirally and circumferentially wound state may become loosened or the end position of the second metal armor layer 80b may be displaced due to tensile force and torsion. Therefore, it is necessary to securely fix the end portion of the second metal armor layer 80b in the boundary region between the first section 100s and the second section 100d.

To securely fix the end portion of the second metal armor layer 80b in the boundary region between the first section 100s and the second section 100d of the submarine cable 100 according to the disclosure, an embodiment of the disclosure applies the inner fixing ring 120 and outer fixing ring 130.

Although it is possible to consider a method of simply joining an end portion of the second metal armor layer 80b to an outer circumferential surface of the first metal armor layer 80a, in this case, since the bonding force by welding may not provide sufficient fixing force against tensile force or the like applied to the submarine cable 100, an embodiment of the disclosure may enhance the structural fixing force by using the inner fixing ring 120 and outer fixing ring 130.

Further, as illustrated in FIG. 5, when the inner fixing ring 120 is mounted, since the fixing ring has a certain thickness, in order to minimize the increase in outer diameter due to the thickness of the fixing ring, a compression process for compressing a mounting portion of the outer circumferential surface of the first metal armor layer 80a where the inner fixing ring 120 is to be mounted, and a wire alignment process for preventing twisting of the wires, may be additionally performed prior to the mounting of the inner fixing ring.

The compression process for compressing the mounting portion of the outer circumferential surface of the first metal armor layer 80a for mounting the inner fixing ring may be performed using a clamp or the like. For example, the clamp compresses the mounting portion of the outer circumferential surface of the first metal armor layer 80a where the inner fixing ring 120 is to be mounted and is then removed, and the inner fixing ring 120 may be mounted to the compressed mounting portion.

Meanwhile, a plurality of clamps may be used. For example, in the compression process, two of the three clamps may be used to first compress left and right portions of the mounting portion of the inner fixing ring 120, and the remaining one clamp may be used to compress the mounting portion of the inner fixing ring 120. The clamp at the mounting portion of the inner fixing ring 120 may be removed before the inner fixing ring 120 is mounted, but the clamps at the left and right portions of the mounting portion may be removed after the mounting of the inner fixing ring 120 is completed. In this case, damage to the first metal armor layer 80a that may occur during the compression process of the outer circumferential surface or a mounting process of the inner fixing ring to be described below may be prevented.

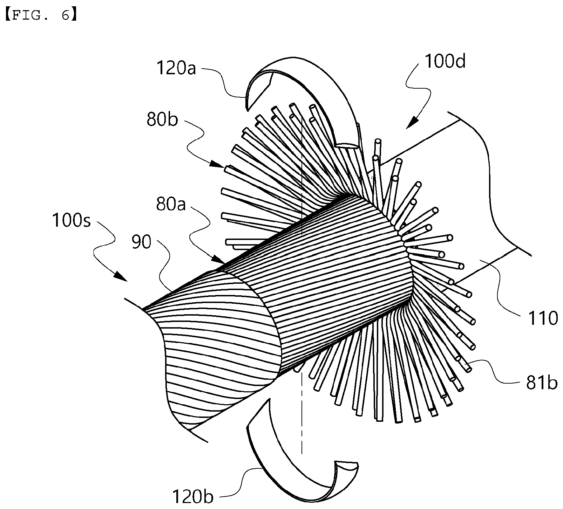

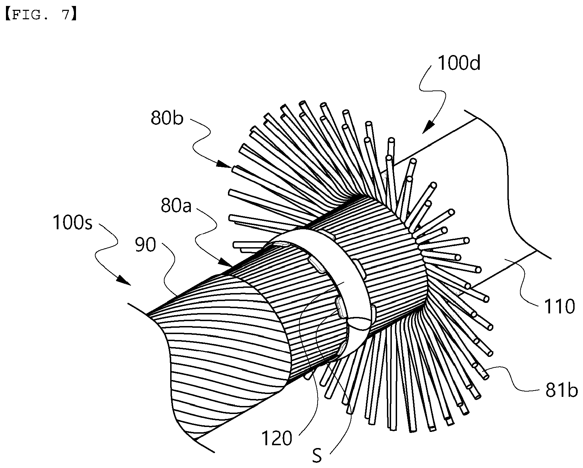

FIG. 6 illustrates a process in which the inner fixing ring 120 in the form of a split ring, is mounted around the outer circumferential surface of the first metal armor layer 80a of the submarine cable 100 according to the disclosure, and FIG. 7 illustrates a state in which the inner fixing ring 120 in the form of a split ring, mounted on the outer circumferential surface of the first metal armor layer 80a, is joined and fixed by a welding method.

As illustrated in FIG. 6, the inner fixing ring 120 may be formed of a metal material having a split ring form 120a and 120b, and may be configured as the form of a single circular ring by joining both ends together.

In addition, as illustrated in FIG. 7, the pair of split fixing rings may be joined at both ends while being mounted on the outer circumferential surface of the first metal armor layer 80a, so that the inner fixing ring 120 is fixed, and the inner fixing ring 120 may be further welded to the outer circumferential surface of the first metal armor layer 80a.

When the inner fixing ring 120 is further welded to the outer circumferential surface of the first metal armor layer 80a, the position of the inner fixing ring 120 may be securely fixed on the outer circumferential surface of the first metal armor layer 80a.

For example, a welded portion s may be provided in a circumferential direction between the left and right edges of the inner fixing ring 120 and the metal armor wires constituting the first metal armor layer 80a, so that the inner fixing ring 120 is fixed to the first metal armor layer 80a. The welded portion s may be formed as two parallel ring shapes by continuously welding both edges of the inner fixing ring 120 and the outer circumferential surface of the first metal armor layer 80a, but is not limited thereto.

In another example, as illustrated in FIG. 7, when the inner fixing ring 120 is joined to the outer circumferential surface of the first metal armor layer 80a, a plurality of welded portions s may be spaced apart and respectively provided along the circumference of the left edge and the right edge of the inner fixing ring 120. In this case, working time can be shortened and cost can be reduced.

Furthermore, in order to minimize the total length of the welded portions s while uniformly maintaining a fixing state in the circumferential direction between the inner fixing ring 120 and the first metal armor layer 80a, it is preferable that the welded portions on the left side and the right side of the inner fixing ring 120 be disposed spaced apart so as not to overlap in the longitudinal direction of the cable.

That is, as illustrated in FIG. 7, a plurality of welded portions s may be formed spaced apart on the left and right sides of the inner fixing ring 120, and may be arranged so as not to overlap in the width direction of the inner fixing ring 120, so that the total length of the welding portions is minimized while providing stable fixing force through the welded portions.

Further, after the welding operation of the inner fixing ring 120 is completed, a zinc-based anticorrosive agent (not illustrated) may be applied to the armor fixing part 100j to prevent corrosion.

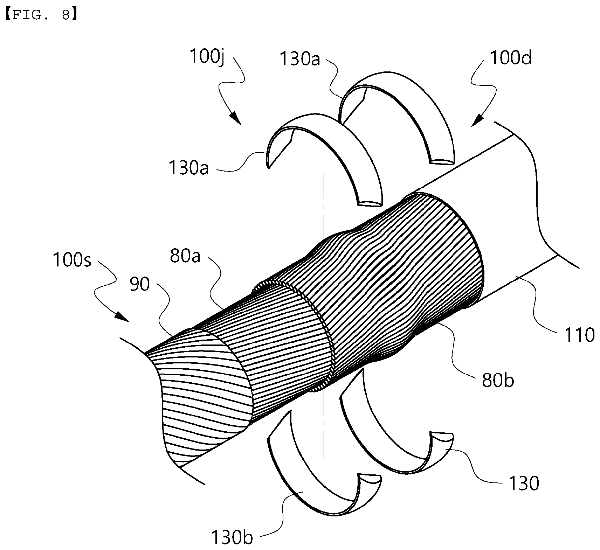

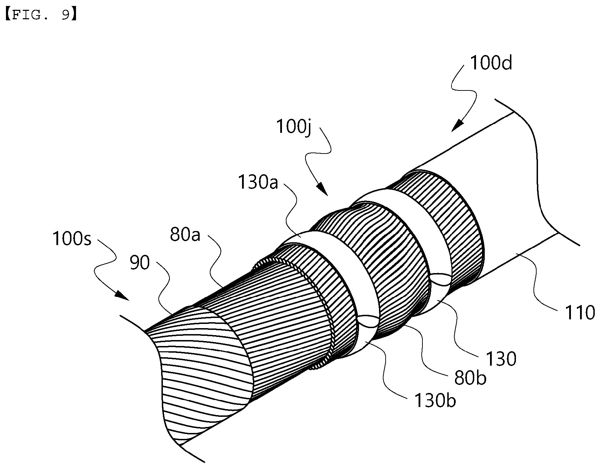

FIG. 8 illustrates a process in which, in a state where the inner fixing ring 120 is mounted to the outer circumferential surface of the first metal armor layer 80a, the second metal armor layer 80b is restored and the outer fixing ring 130 is mounted so as to surround the second metal armor layer 80b, and FIG. 9 illustrates a state in which the outer fixing ring 130 is completely mounted on the outer circumferential surface of the second metal armor layer 80b of the submarine cable 100 according to the disclosure.

Once the inner fixing ring 120 is fixed to the outer circumferential surface of the first metal armor layer 80a by welding or the like, as illustrated in FIG. 8, the second metal armor layer 80b, which was previously deployed outward for the mounting of the inner fixing ring 120, is restored to its original position, and the outer fixing ring 130 may be mounted to the second metal armor layer 80b.

As also illustrated in FIG. 8, even if the second metal armor layer 80b is restored in a state in which the inner fixing ring 120 is mounted, the region where the inner fixing ring 120 is mounted remains in a raised state of the second metal armor layer 80b due to the thickness of the inner fixing ring 120. The outer fixing ring 130 is a fixing ring that is mounted to circumferentially surround the second metal armor layer 80b while the second metal armor layer 80b is disposed on the outer side of the inner fixing ring 120, and its shape or material may be the same as that of the inner fixing ring 120.

The outer fixing ring 130 may be mounted at a position different from that of the inner fixing ring 120 along the longitudinal direction of the cable. That is, the outer fixing ring 130 may be mounted at a position different from a mounting position of the inner fixing ring 120, where the second metal armor layer 80b remains in a raised state.

For example, the outer fixing ring 130 may be provided at least one on each of the left and right sides of the mounting position of the inner fixing ring 120.

In addition, in a state in which the second metal armor layer 80b is restored, a compression process using a clamp and a wire alignment process may also be performed at both the mounting position of the inner fixing ring 120 and the mounting position of the outer fixing ring 130.

Therefore, as illustrated in FIG. 9, when at least one outer fixing ring 130 is mounted on each of the left and right sides of the mounting position of the inner fixing ring 120, the inner fixing ring 120, which is welded and fixed to the outer circumferential surface of the first metal armor layer 80a, may serve as a wedge against movement of the second metal armor layer 80b with respect to the first metal armor layer 80a.

For example, in the embodiment illustrated in FIG. 9, when the second metal armor layer 80b is tensioned to the right relative to the first metal armor layer 80a and slippage occurs, the left outer fixing ring 130 may become engaged with the fixed inner fixing ring 120, thereby preventing displacement of the second metal armor layer 80b to the right. Similarly, even when the second metal armor layer 80b is tensioned to the left relative to the first metal armor layer 80a and slippage occurs, the right outer fixing ring 130 may become engaged with the fixed inner fixing ring 120, thereby blocking displacement of the second metal armor layer 80b to the left, and thus may perform a bidirectional wedge function.

That is, even if tensile force or torsion is applied in a manner that may cause slipping or separation of the second metal armor layer 80b from the first metal armor layer 80a, an end portion of the second metal armor layer 80b may be blocked from spreading by the outer fixing ring 130, and the outer fixing ring 130 may be engaged with the inner fixing ring 120 to prevent displacement of the second metal armor layer 80b with respect to the first metal armor layer 80a.

In this case, the outer fixing ring 130 mounted to the second metal armor layer 80b may omit an additional welding process to the outer circumferential surface of the second metal armor layer 80b. This is because the inner fixing ring is already joined to the first metal armor layer and sufficiently performs the wedge function, thereby blocking movement in the longitudinal direction of the cable.

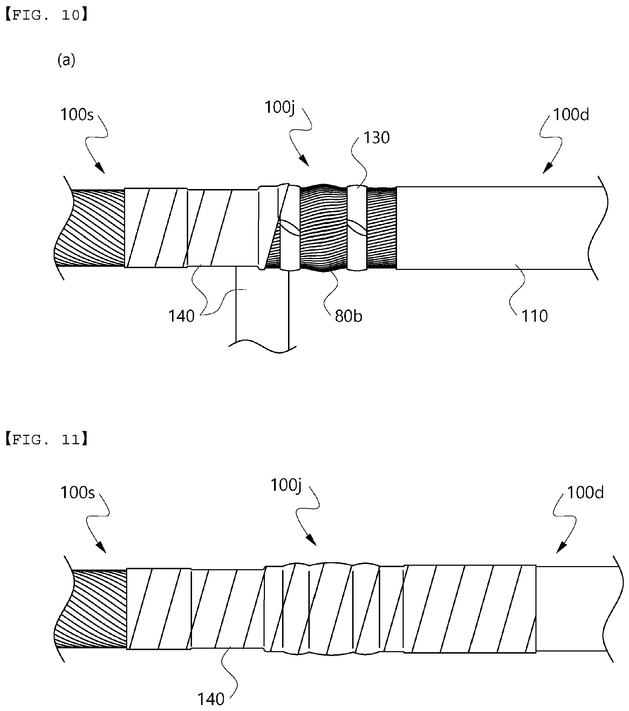

FIG. 10 illustrates a process of forming a carbon tape layer by circumferentially winding carbon tape around the armor fixing part 100j in a state where the outer fixing ring 130 is mounted, and FIG. 11 illustrates a state in which the armor fixing part 100j of the submarine cable 100 according to the disclosure is finished with the carbon tape layer.

Once the outer fixing ring 130 is completely mounted, it is preferable to form a boundary region protective layer on the outer side of the armor fixing part 100j, which corresponds to the boundary region between the first section 100s and the second section 100d.

According to an embodiment of the disclosure, as illustrated in FIG. 10, the boundary region may be finished by circumferentially winding carbon tape around the boundary region between the first section 100s and the second section 100d, thereby forming a carbon tape layer.

The carbon tape layer 140 may be formed of at least one or more layers, and the armor fixing part 100j may be finished by spraying adhesive spray during the carbon tape circumferential winding process to fix the tape in place.

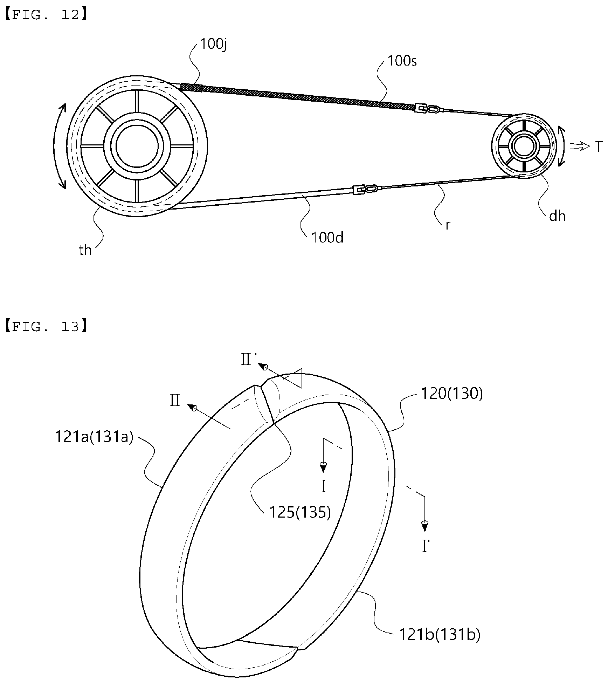

FIG. 12 illustrates a test apparatus for the submarine cable 100 according to the disclosure.

The submarine cable 100 according to the disclosure includes the first section 100s and the second section 100d for seabed laying and underwater laying, respectively, and the armor fixing part 100j is formed by the above-described method.

The first section 100s and the second section 100d of the submarine cable 100 configured as described above are respectively laid in a static section and a dynamic section, and in the above-described armor fixing part 100j, the fixed state and finished state of each metal armor layer needs to be stably maintained.

Accordingly, FIG. 12 illustrates a test in which a section of the submarine cable 100 including the armor fixing part 100j, located at the boundary between the first section 100s and the second section 100d, is mounted in a bending-tension test loop (T-B test loop) to evaluate whether any abnormalities occur in the interior of the submarine cable 100, including the armor fixing part 100j, under conditions in which both bending and tension are applied.

In order to implement bending, the test apparatus is rotatably installed in a horizontal state and includes a test wheel th having a diameter proportional to the outer diameter of the cable under test, and after installing the submarine cable 100 under test on the test wheel th, towing wires r are respectively connected to both ends of the submarine cable 100 under test, and the towing wires are connected to a towing wheel dh to alternately tow in opposite directions. During the test, the armor fixing part 100j, which is the boundary region between the first section 100s and the second section 100d, is repeatedly subjected to bending and stretching on the test wheel to ensure that tensile force is applied to the entire submarine cable 100.

As a result of the test, no abnormalities were found in the communication test using the optical fibers of the optical unit included in the submarine cable 100, and although minor external damage was observed on the carbon tape layer that finishes the armor fixing part 100j, no damage to the structures such as the internal metal wires or no damage to the fixing ring, etc. was observed, thereby confirming that the function of the armor fixing part 100j was in a very satisfactory state.

FIGS. 13 to 15 illustrate examples of the inner fixing ring 120 or the outer fixing ring 130 applied to the armor fixing part 100j of the submarine cable 100 according to the disclosure.

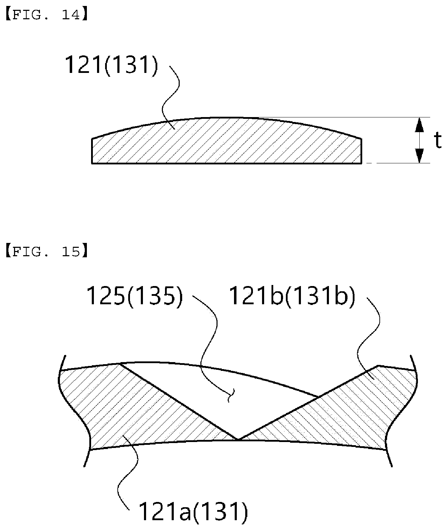

Specifically, FIG. 13 illustrates a state in which a pair of split rings are combined, FIG. 14 illustrates a cross-sectional view (I-I') in the thickness direction of the split ring, and FIG. 15 illustrates a cross-sectional view (II-II') in the transverse direction at the junctions 125 and 135 of the split ring.

The fixing ring may be compressed using a clamp or the like in order to minimize its diameter before welding, and as illustrated in FIG. 14, in order to prevent damage to metal wires, etc. constituting the metal armor layer by the inner edge of the fixing ring during the compression process, the central portion of the fixing ring in the width direction may be formed with the greatest thickness t.

As described above, the inner fixing ring 120 and the outer fixing ring 130 may be of a split ring structure, and end portions thereof may be joined to each other by welding or the like. When the end portions of the split rings forming the junctions 125 and 135 are configured parallel to the longitudinal direction of the submarine cable, the joint length by welding may be insufficient, resulting in inadequate joint strength of the split rings.

Therefore, as illustrated in FIG. 13, in order to ensure that each joining end has a sufficient bonding length, the end portions of the split rings forming the junctions 125 and 135 may be formed in an oblique shape that is not parallel to the longitudinal direction of the submarine cable.

In addition, when the joining surfaces of each split ring are configured to be vertical and make surface contact, it may be difficult to sufficiently supply weld melt between the joining surfaces during the process of mutually joining the split rings, resulting in insufficient joint strength of the split rings.

Accordingly, in order to allow weld melt to be sufficiently injected into the junctions 125 and 135, it is preferable that, as illustrated in FIG. 15, the respective joining surfaces of each split ring are formed as inclined surfaces in opposite directions, so that the weld melt may be injected therebetween. This specification has been described with reference to preferred embodiments of the disclosure, but it will be understood by those skilled in the art that various modifications and alterations may be made to the disclosure without departing from the spirit and scope of the disclosure as defined in the claims described below. Therefore, it should be understood that any modified embodiment that essentially includes the constituent elements of the claims of the disclosure is included in the technical scope of the disclosure.

## Claims

1. A submarine cable, comprising:
a cable core part including one or more power units for power transmission; and
a cable protection part surrounding an outer side of the cable core part,
wherein the submarine cable includes a first section primarily for seabed laying and a second section primarily for underwater laying along a longitudinal direction,
wherein the cable protection part includes an armor layer formed by circumferentially winding a plurality of armor wires,
wherein the armor layer includes a first armor layer formed continuously in the first section and the second section, and a second armor layer formed outside the first armor layer in the second section,
wherein the cable protection part includes an armor fixing part configured to fix the second armor layer to the first armor layer in a boundary region between the first section and the second section, and
wherein the armor fixing part includes an inner fixing ring mounted to circumferentially surround the first armor layer in the boundary region, and an outer fixing ring mounted to circumferentially surround the second armor layer disposed at a position different from the inner fixing ring along the longitudinal direction of the cable.

2. The submarine cable of claim 1, wherein the cable protection part of the first section includes a serving layer finished by winding yarns around the outer side of the first armor layer, and the cable protection part of the second section includes a sheath layer finished by covering the outer side of the second armor layer with a polymer resin.

3. The submarine cable of claim 1, wherein the power unit includes:
a conductor;
an inner semi-conductive layer surrounding the conductor;
an insulation layer surrounding the inner semi-conductive layer;
an outer semi-conductive layer surrounding the insulation layer; and
a metal shielding layer surrounding the outer semi-conductive layer.

4. The submarine cable of claim 1, wherein the inner fixing ring is mounted to surround the first armor layer after an end portion of the second armor layer is deployed outward in the boundary region, and after the inner fixing ring is completely mounted, the deployed second armor layer is restored, and the outer fixing ring is mounted to surround the second armor layer.

5. The submarine cable of claim 1, wherein the outer fixing ring is provided on each of left and right sides of a mounting position of the inner fixing ring.

6. The submarine cable of claim 1, wherein the first armor layer is a first metal armor layer formed of metal armor wires, and the second armor layer is a second metal armor layer formed of metal armor wires.

7. The submarine cable of claim 6, wherein the inner fixing ring is fixed by welding to the first metal armor layer.

8. The submarine cable of claim 7, wherein a welded portion is provided, which is welded in a circumferential direction between left and right edges of the inner fixing ring and metal armor wires constituting the first metal armor layer, so that the inner fixing ring is fixed to the first metal armor layer.

9. The submarine cable of claim 8, wherein the welded portion includes a plurality of welded portions spaced apart along circumferential directions of left edge and right edge of the inner fixing ring.

10. The submarine cable of claim 1, wherein the inner fixing ring and the outer fixing ring are each composed of two split rings, and respective end portions of the split rings are joined to each other to form a circular ring.

11. The submarine cable of claim 10, wherein respective joining surfaces of the split rings are formed as inclined surfaces in opposite directions so that weld melt is injected therebetween.

12. The submarine cable of claim 10, wherein the respective end portions of the split rings are formed in an oblique shape not parallel to the longitudinal direction of the cable.

13. The submarine cable of claim 10, wherein a cross-sectional thickness of the split ring has a maximum thickness at a central portion thereof.

14. The submarine cable of claim 1, further comprising:
at least one carbon tape layer circumferentially wound to surround an outer side of the armor fixing part in the boundary region.
